# EUROPÄISCHE PATENTSCHRIFT

(11) **EP 2 807 098 B1**
(45) Veröffentlichungstag und Bekanntmachung des Hinweises auf die Patenterteilung: **16.09.2015**
(21) Anmeldenummer: 12810125.0
(22) Anmeldetag: 30.11.2012
(51) Int. Cl.: B65G 54/02

(54) **TRANSPORTVORRICHTUNG MIT GELENKIGEM FÖRDERELEMENT**
CONVEYING DEVICE WITH ARTICULATED CONVEYING ELEMENT
DISPOSITIF DE TRANSPORT POURVU D'UN ÉLÉMENT TRANSPORTEUR ARTICULÉ

(30) Priorität: 24.01.2012 DE 102012200951
(43) Veröffentlichungstag der Anmeldung: 03.12.2014
(73) Patentinhaber: Robert Bosch GmbH, 70442 Stuttgart (DE)
(72) Erfinder: REINISCH, Martin, 73733 Esslingen (DE); Van De Loecht, Heinrich, 76461 Muggensturm (DE)
(86) Internationale Anmeldenummer: PCT/EP2012/074043
(87) Internationale Veröffentlichungsnummer: WO 2013/110377

(56) Entgegenhaltungen:
- WO-A2-03/047977
- DE-A1-102010 027 925
- JP-A- 2006 052 037

## Beschreibung

### Stand der Technik

Die vorliegende Erfindung betrifft eine Transportvorrichtung mit einer Vielzahl von gelenkigen, individuell bewegbaren Förderelementen, insbesondere zur Förderung von Produkten für eine Beschickung von Verpackungsmaschinen.

Transportsysteme zur Förderung von Produkten, insbesondere zur Verwendung bei Verpackungsmaschinen, sind aus dem Stand der Technik in unterschiedlichen Ausgestaltungen bekannt. Aus der gattungsgemäßen DE 10 2010 027 925 A1 ist beispielsweise eine Transportvorrichtung mit einem gelenkigen Förderelement bekannt, welches durch das Vorsehen von Gelenken zwischen einzelnen Teilelementen des Förderelements sehr enge Radien an einer umlaufenden Laufschiene durchfahren kann. Hierbei wird im Kurvenbereich ein Verschleiß und eine etwaige Rutschbewegung der Laufrollen vermieden. Ein Nachteil bei dieser Transportvorrichtung ist allerdings, dass ein Eisenrückschluss aufgrund der aus einzelnen gelenkig miteinander verbundenen Teilelementen aufgebauten Förderelementen aus konstruktiven Gründen unterbrochen werden muss. Wenn, wie beispielsweise in der US 6,876,896 B1 eine nicht unterbrochene Eisenrückschlussplatte verwendet wird, sind den möglichen Radien an einer umlaufenden Laufschiene jedoch Grenzen gesetzt, so dass ein Platzbedarf für diese Transportvorrichtung sehr groß ist. Dies ist insbesondere bei Anwendungen im Bereich der Verpackungstechnik nachteilig.

### Offenbarung der Erfindung

Die erfindungsgemäße Transportvorrichtung zur Produktförderung mit den Merkmalen des Anspruchs 1 weist demgegenüber den Vorteil auf, dass sie einerseits die Reduzierung der Radien an den Kurvenbereichen bei konstantem Luftspalt zwischen den bogenförmigen Primärteilen und den Permanentmagneten ermöglicht und andererseits ein gemeinsamer Eisenrückschluss vorhanden ist. Hierdurch kann eine gezielte Führung des magnetischen Flusses bereitgestellt werden. Dies wird erfindungsgemäß dadurch erreicht, dass die Transportvorrichtung eine Vielzahl von individuell bewegbaren Förderelementen umfasst, welche jeweils wenigstens ein erstes und ein zweites Teilelement aufweisen, wobei die Teilelemente mittels eines Gelenks gelenkig miteinander verbunden sind. Hierdurch werden kleinere Kurvenradien ermöglicht. Dabei weist jedes Teilelement wenigstens einen Permanentmagneten auf. Das Gelenk zwischen den Teilelementen ist dabei an einer Rückschlussplatte angeordnet, so dass die Rückschlussplatte in ein erstes und ein zweites Plattenteil unterteilt ist, wobei jedes Plattenteil an einem Teilelement des Förderelements angeordnet ist. Somit bleibt die Gelenkigkeit der Förderelemente erhalten und die Förderelemente weisen miteinander über Gelenke verbundene Plattenteile der Rückschlussplatte auf, so dass im Betrieb praktisch eine gemeinsame Rückschlussplatte erhalten wird. Hierdurch weist die gelenkig unterteilte erfindungsgemäße Rückschlussplatte annähernd die gleichen Eigenschaften wie eine herkömmliche einstückige Rückschlussplatte auf.

Die Unteransprüche zeigen bevorzugte Weiterbildungen der Erfindung.

Für eine besonders gute magnetische Kupplung weist jedes Teilelement der Förderelemente wenigstens zwei Permanentmagnete auf.

Für einen möglichst kostengünstigen und einfachen Aufbau wird das Gelenk zwischen den Plattenteilen der Rückschlussplatte durch eine Verzahnung gebildet.

Eine besonders kostengünstige Herstellung eines erfindungsgemäßen Förderelements ist möglich, wenn vorzugsweise das erste und zweite Plattenteil eine gleiche geometrische Gestalt aufweisen und im montierten Zustand am Förderelement das zweite Plattenteil um 180° um eine Längsachse des Förderelements gedreht angeordnet ist. Somit kann die Gleichteilezahl erhöht werden und die Fertigung und Montage deutlich verbilligt werden.

Besonders bevorzugt umfasst die Verzahnung erste Zähne, welche einteilig mit dem ersten Plattenelement gebildet sind, und zweite Zähne, welche einteilig mit dem zweiten Plattenteil gebildet sind. Vorzugsweise sind die Zähne dabei als Quader ausgebildet und eine Gelenkachse des Gelenks verläuft quer zu einer Längsachse der Zähne. Weiter bevorzugt sind die Zähne des ersten und zweiten Plattenteils der Rückschlussplatte in Richtung der Gelenkachse abwechselnd angeordnet. Somit kann erfindungsgemäß die Verzahnung durch Zähne, welche an den einander gegenüberliegenden Stirnseiten benachbarter Plattenteile angeordnet sind, gebildet werden.

Besonders bevorzugt ist zwischen den Zähnen benachbarter Plattenteile im montierten Zustand eine Spielpassung vorhanden. Hierdurch wird eine ausreichende Bewegungsmöglichkeit der Zähne zur Bereitstellung der gelenkigen Funktion sichergestellt und andererseits ist kein zu großes Spiel vorhanden, was zu unerwünschten Geräuschen während des Betriebs des Förderelements führen könnte.

Für einen möglichst gleichmäßigen Lauf der Förderelemente ist vorzugsweise an jedem Teilelement eines Förderelements wenigstens eine Laufrolle angeordnet. Besonders bevorzugt fallen weiterhin eine Laufrollenachse und die Gelenkachse des Gelenks zusammen.

Weiter bevorzugt umfasst das Förderelement ferner ein zweites Gelenk, welches zwischen Rahmenbauteilen der Teilelemente des Förderelements angeordnet ist. Hierdurch kann eine unerwünschte Belastung des ersten Gelenks im Bereich der Verzahnung zwischen den Plattenteilen der Rückschlussplatte verhindert werden.

Die erfindungsgemäße Transportvorrichtung wird vorzugsweise in Verbindung mit Verpackungsmaschinen verwendet, beispielsweise bei Kartonierern oder Maschinen/Linien für die Zweitverpackung. Alternativ kann die erfindungsgemäße Transportvorrichtung auch bei Montagelinien oder in Logistiksystemen zum Transport von Stückgütern verwendet werden.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische, perspektivische Ansicht von Förderelementen auf einer Laufschiene gemäß einem Ausführungsbeispiel der Erfindung,
- Figur 2: eine schematische Darstellung von zwei Plattenteilen einer Rückschlussplatte im unmontierten Zustand,
- Figur 3: eine schematische Darstellung der Plattenteile der Rückschlussplatte im zusammengesetzten Zustand, und
- Figur 4: eine schematische Darstellung der Plattenteile, welche die Gelenkfunktion zeigen.

### Bevorzugte Ausführungsform der Erfindung

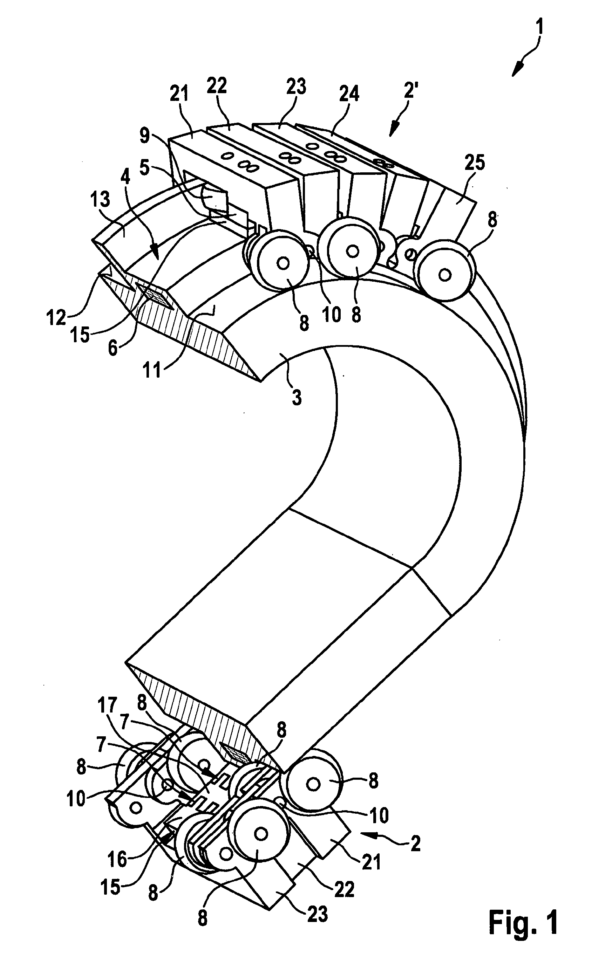

Nachfolgend wird unter Bezugnahme auf die Figuren 1 bis 4 eine Transportvorrichtung 1 gemäß einem bevorzugten Ausführungsbeispiel der Erfindung im Detail beschrieben.

Wie aus Figur 1 ersichtlich ist, umfasst die Transportvorrichtung 1 mehrere Förderelemente 2, 2' sowie eine in Figur 1 nur teilweise dargestellte, ortsfest und umlaufend vorgesehene Laufschiene 3. Die Laufschiene 3 weist einen Aufbau mit linearen Teilbereichen sowie Kurvenbereichen auf, so dass sich insgesamt eine ovalförmige Strecke ergibt. Weiterhin sind auch andere Laufbahnformen, z.B. winkelförmig, möglich, die sich aus modularen Linear- und Kurvenelementen zusammensetzen. Die Laufschiene 3 umfasst eine erste Laufbahn 11, eine zweite Laufbahn 12 sowie eine zwischen den beiden Laufbahnen angeordnete Führungsschiene 13.

Ferner ist eine Linearmotorantriebsvorrichtung 4 vorgesehen, welche eine Vielzahl von in der Laufschiene 3 angeordneten Spulen 6 sowie am Förderelement 2 angeordneten Permanentmagnete 5 umfasst. Hierdurch kann eine Transportvorrichtung mit einer Vielzahl von unabhängig voneinander angetriebenen Förderelementen 2 realisiert werden. Dabei wird ein elektromagnetisches Wanderfeld mittels der Spulen 6 erzeugt, wobei die Förderelemente 2, 2' über magnetische Kopplung den Wanderfeldern folgen und somit entlang der Laufschiene bewegt werden.

Die in Figur 1 gezeigten Förderelemente 2, 2' sind grundsätzlich gleich aufgebaut, weisen jedoch eine unterschiedliche Anzahl von Teilelementen auf. Wie aus Figur 1 ersichtlich ist, weist das Förderelement 2 ein erstes Teilelement 21, ein zweites Teilelement 22 und ein drittes Teilelement 23 auf. Das andere dargestellte Förderelement 2' weist insgesamt fünf Teilelemente 21, 22, 23, 24 und 25 auf.

An beiden Seiten in Bewegungsrichtung der Förderelemente sind eine Vielzahl von Laufrollen 8 angeordnet. Ferner sind Führungsrollen 9 für einen Kontakt für die Führungsschiene 13 vorgesehen, wobei die Führungsrollen 9, wie in Figur 1 am Förderelement 2' ersichtlich ist, um 90° gedreht zu den Laufrollen 8 angeordnet sind. Ferner weist jedes Teilelement der Förderelemente 2, 2' zwei Permanentmagnete 5, 5' auf.

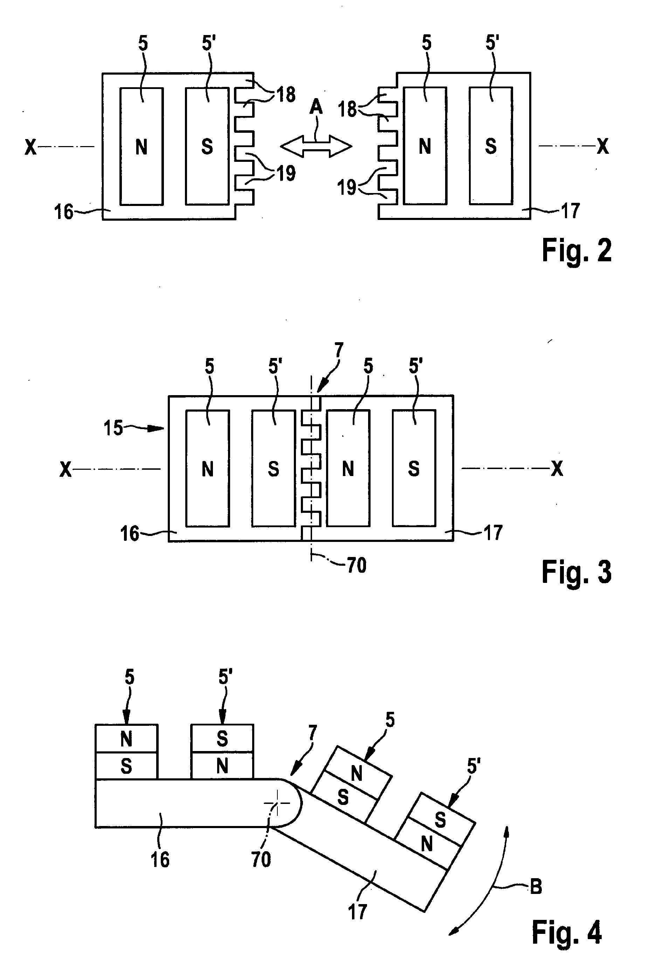

Jedes Förderelement 2, 2' weist ferner eine Rückschlussplatte 15 auf. Die Rückschlussplatte 15 ist aus mehreren Plattenteilen 16, 17 zusammengesetzt, was schematisch in den Figuren 2 bis 4 dargestellt ist. Hierbei sind jedem Teilelement 21, 22, 23, 24, 25 der Förderelemente 2, 2' jeweils ein Plattenteil 16, 17 zugeordnet. Wie insbesondere aus Figur 2 ersichtlich ist, weisen dabei die Plattenteile 16, 17 die gleiche äußere Gestalt auf, wobei für eine Montage das zweite Plattenteil 17 um eine Längsachse X-X um 180° gedreht ist.

Jedes Plattenteil weist quaderförmige vorstehende Zähne 18 mit entsprechend dazwischen gebildeten Zwischenräumen 19 auf. Die Zähne 18 sind dabei an einer Stirnseite der Plattenteile 16, 17 angeordnet. Wie in Figur 2 ersichtlich ist, können die beiden Plattenteile 16, 17 somit, wie durch den Doppelpfeil A angedeutet, ineinander geschoben werden. Der zusammengeschobene Zustand ist in Figur 3 gezeigt. Dabei ist zwischen den Zähnen 18 der beiden Plattenteile 16, 17 eine Spielpassung vorhanden, was eine gelenkige Verbindung der beiden Plattenteile 16, 17 ermöglicht. Somit ist zwischen den beiden Plattenteilen 16, 17 ein Gelenk 7 gebildet, wodurch das erste und zweite Plattenteil 16, 17 um eine Gelenkachse 70 schwenken kann. Dies ist in Figur 4 durch den Doppelpfeil B angedeutet.

Weiterhin ist zwischen den Teilelementen 21, 22, 23, 24, 25 der Förderelemente 2, 2' jeweils noch ein zweites Gelenk 10 vorgesehen (vgl. Figur 1). Dieses zweite Gelenk 10 übernimmt insbesondere die Gewichtsaufnahme der Teilelemente 21, 22, 23, 24, 25 eines Förderelements 2.

Somit wird erfindungsgemäß eine mehrteilige Rückschlussplatte 15 für jedes Förderelement 2 bereitgestellt, welche mehrere Plattenteile 16, 17 entsprechend der Anzahl der Teilelemente 21, 22, 23, 24, 25 umfasst. Über Verzahnungen zwischen den Plattenteilen werden jeweils Gelenke 7 bereitgestellt, so dass die Förderelemente 2, 2' in der Lage sind, auch kleine Radien an der Laufschiene 3 zu durchfahren. Durch die erfindungsgemäße Verzahnung mit im Wesentlichen quaderförmigen Zähnen 18 kann eine möglichst große Überdeckung zwischen benachbarten Plattenteilen 16, 17 auch bei einer Kurvenfahrt erreicht werden. Somit können nahezu dieselben Krafteigenschaften der Rückschlussplatte 15 wie bei einer herkömmlichen, einteiligen Rückschlussplatte erreicht werden. Hiermit ist erfindungsgemäß eine verbesserte magnetische Kopplung von Plattenteilen 16, 17 der Rückschlussplatte möglich, wobei durch die erfindungsgemäße Kopplung kein zusätzlicher Verschleiß an den Plattenteilen auftritt. Somit kann erfindungsgemäß der magnetische Fluss in einem Förderelement 2, 2' über die mehrteilige Rückschlussplatte 15 wesentlich besser ausgeführt werden und es entstehen an den Übergangsstellen zwischen den Plattenteilen 16, 17 deutlich geringere Streufelder. Dies bewirkt eine deutlich höhere Kraft für die Linearmotorantriebsvorrichtung 4, wobei durch die Verwendung der Verzahnung insbesondere auch ein Luftspalt zwischen den beiden Plattenteilen 16, 17 auf ein Minimum reduziert ist.

## Patentansprüche

1. Transportvorrichtung zur Förderung eines Produkts, umfassend
- eine Vielzahl von individuell bewegbaren Förderelementen (2, 2') zum Fördern der Produkte,
- eine ortsfeste, umlaufend angeordnete Laufschiene (3), welche einen Laufpfad für die Förderelemente (2, 2') definiert, und
- eine Linearmotorantriebsvorrichtung (4) zum Antreiben der Förderelemente (2, 2'),
- wobei die Förderelemente (2, 2') jeweils Permanentmagnete (5, 5') aufweisen, die mit Spulen (6) der Linearmotorantriebsvorrichtung (4) in Wirkverbindung stehen,
- wobei jedes Förderelement (2, 2') wenigstens ein erstes Teilelement (21) und ein zweites Teilelement (22) aufweist, welche mittels eines Gelenkes (7) gelenkig miteinander verbunden sind,
- wobei jedes Teilelement (21, 22) wenigstens einen Permanentmagneten (5, 5') aufweist,
- wobei jedes Förderelement (2, 2') eine Rückschlussplatte (15) aufweiset, **dadurch gekennzeichnet, dass**
das Gelenk (7) darart an der Rückschlussplatte (15) angeordnet ist, dass die Rückschlussplatte (15) in einen ersten Plattenteil (16) und einen zweiten Plattenteil (17) unterteilt ist, welche über das Gelenk (7) miteinander verbunden sind.

2. Transportvorrichtung nach Anspruch 1, **dadurch gekennzeichnet, dass** an jedem Teilelement (21, 22) wenigstens zwei Permanentmagnete (5, 5') angeordnet sind, welche gemeinsam auf einem Plattenteil (16, 17) der Rückschlussplatte (15) angeordnet sind.

3. Transportvorrichtung nach einem der vorhergehenden Ansprüche, **dadurch gekennzeichnet, dass** das Gelenk (7) zwischen dem ersten und zweiten Plattenteil (16, 17) der Rückschlussplatte (15) eine Verzahnung umfasst.

4. Transportvorrichtung nach einem der vorhergehenden Ansprüche, **dadurch gekennzeichnet, dass** das erste und zweite Plattenteil (16, 17) eine gleiche geometrische Gestalt aufweisen und im montierten Zustand das zweite Plattenteil (17) um eine Längsachse der Rückschlussplatte (15) um 180° gedreht zum ersten Plattenteil (16) angeordnet ist.

5. Transportvorrichtung nach Anspruch 4 oder 5, **dadurch gekennzeichnet, dass** die Verzahnung eine Vielzahl von Zähnen (18) umfasst, wobei die Zähne (18) jeweils einteilig mit den Plattenteilen (16, 17) der Rückschlussplatte gebildet sind.

6. Transportvorrichtung nach Anspruch 5, **dadurch gekennzeichnet, dass** die Zähne (18) im Wesentlichen als Quader ausgebildet sind und Zähne des ersten und zweiten Plattenteils (16, 17) in Richtung einer Gelenkachse (70) abwechselnd angeordnet sind.

7. Transportvorrichtung nach Anspruch 5 oder 6, **dadurch gekennzeichnet, dass** zwischen den Zähnen (18) der Plattenteile (16, 17) im montierten Zustand eine Spielpassung ausgebildet ist.

8. Transportvorrichtung nach einem der vorhergehenden Ansprüche, **dadurch gekennzeichnet, dass** an jedem Teilelement (21, 22) mindestens eine Laufrolle (8) angeordnet ist.

9. Transportvorrichtung nach einem der vorhergehenden Ansprüche, **dadurch gekennzeichnet, dass** eine Laufrollenachse der Laufrollen (8) und die Gelenkachse (70) des Gelenks (7) zusammenfallen.

10. Transportvorrichtung nach einem der vorhergehenden Ansprüche, **gekennzeichnet durch** ein zweites Gelenk (10), welches zwischen dem ersten und zweiten Teilelement (21, 22) vorgesehen ist.

## Claims

1. Transporting apparatus for conveying a product, comprising
- a multiplicity of individually movable conveying elements (2, 2') for conveying the products,
- a fixed-location running rail (3), which defines a closed running path for the conveying elements (2, 2'), and
- a linear-motor-drive apparatus (4) for driving the conveying elements (2, 2'),
- wherein the conveying elements (2, 2') each have permanent magnets (5, 5'), which are in operative connection with coils (6) of the linear-motor-drive apparatus (4),
- wherein each conveying element (2, 2') has at least a first sub-element (21) and a second sub-element (22), which are connected to one another in an articulated manner by means of an articulation (7),
- wherein each sub-element (21, 22) has at least one permanent magnet (5,5'),
- wherein each conveying element (2,2') has a magnetic return plate (15),
**characterized in that** the articulation (7) is arranged on the magnetic return plate (15) such that the magnetic return plate (15) is subdivided into a first plate part (16) and a second plate part (17), which are connected to one another via the articulation (7).

2. Transporting apparatus according to Claim 1, **characterized in that** each sub-element (21, 22) has arranged on it at least two permanent magnets (5, 5'), which are arranged together on a plate part (16, 17) of the magnetic return plate (15).

3. Transporting apparatus according to either of the preceding claims, **characterized in that** the articulation (7), between the first and second plate parts (16, 17) of the magnetic return plate (15), comprises a toothing formation.

4. Transporting apparatus according to one of the preceding claims, **characterized in that** the first and second plate parts (16, 17) are of the same geometrical configuration and, in the assembled state, the second plate part (17) is arranged in relation to the first plate part (16) such that it has been turned through 180° about a longitudinal axis of the magnetic return plate (15).

5. Transporting apparatus according to Claim 4 or 5, **characterized in that** the toothing formation comprises a multiplicity of teeth (18), wherein the teeth (18) are each formed in one piece with the plate parts (16, 17) of the magnetic return plate.

6. Transporting apparatus according to Claim 5, **characterized in that** the teeth (18) are designed essentially in cuboidal form and teeth of the first and second plate parts (16, 17) are arranged to alternate in the direction of an articulation axis (70).

7. Transporting apparatus according to Claim 5 or 6, **characterized in that** a clearance fit is formed between the teeth (18) of the plate parts (16, 17) in the assembled state.

8. Transporting apparatus according to one of the preceding claims, **characterized in that** at least one running roller (8) is arranged on each sub-element (21, 22).

9. Transporting apparatus according to one of the preceding claims, **characterized in that** an axis of the running rollers (8) and the axis (70) of the articulation (7) coincide.

10. Transporting apparatus according to one of the preceding claims, **characterized by** a second articulation (10), which is provided between the first and second sub-elements (21, 22).

## Revendications

1. Dispositif de transport pour le transport d'un produit, comprenant:
- une multiplicité d'éléments de transport déplaçables individuellement (2, 2') pour le transport des produits,
- un rail de roulement stationnaire (3), disposé en boucle fermée, qui définit un chemin de roulement pour les éléments de transport (2, 2'), et
- un dispositif d'entraînement à moteur linéaire (4) pour l'entraînement des éléments de transport (2, 2'),
- dans lequel les éléments de transport (2, 2') présentent respectivement des aimants permanents (5, 5'), qui sont en liaison active avec des bobines (8) du dispositif d'entraînement à moteur linéaire (4),
- dans lequel chaque élément de transport (2, 2') présente au moins un premier élément partiel (21) et un deuxième élément partiel (22), qui sont articulés l'un à l'autre au moyen d'une articulation (7),
- dans lequel chaque élément partiel (21, 22) présente au moins un aimant permanent (5, 5'),
- dans lequel chaque élément de transport (2, 2') présente une plaque anti-retour (15),
**caractérisé en ce que** l'articulation (7) est disposée sur la plaque anti-retour (15), de telle manière que la plaque anti-retour (15) soit divisée en une première partie de plaque (16) et une deuxième partie de plaque (17), qui sont reliées l'une à l'autre par l'articulation (7).

2. Dispositif de transport selon la revendication 1, **caractérisé en ce qu'**au moins deux aimants permanents (5, 5'), qui sont disposés ensemble sur une partie de plaque (16, 17) de la plaque anti-retour (15), sont disposés sur chaque élément partiel (21, 22).

3. Dispositif de transport selon l'une quelconque des revendications précédentes, **caractérisé en ce que** l'articulation (7) comprend une denture entre la première et la deuxième parties de plaque (16, 17) de la plaque anti-retour (15).

4. Dispositif de transport selon l'une quelconque des revendications précédentes, **caractérisé en ce que** la première et la deuxième parties de plaque (16, 17) présentent une forme géométrique identique et à l'état monté la deuxième partie de plaque (17) est disposée en position tournée de 180° par rapport à la première partie de plaque (16) autour d'un axe longitudinal de la plaque anti-retour (15).

5. Dispositif de transport selon la revendication 4 ou 5, **caractérisé en ce que** la denture comprend une multiplicité de dents (18), dans lequel les dents (18) sont formées respectivement d'un seul tenant avec les parties de plaque (16, 17) de la plaque anti-retour.

6. Dispositif de transport selon la revendication 5, **caractérisé en ce que** les dents (18) sont configurées essentiellement en parallélépipèdes et les dents de la première et de la deuxième parties de plaque (16, 17) sont disposées en alternance en direction d'un axe d'articulation (70).

7. Dispositif de transport selon la revendication 5 ou 6, **caractérisé en ce qu'**un ajustement avec jeu est formé à l'état monté entre les dents (18) des parties de plaque (16, 17).

8. Dispositif de transport selon l'une quelconque des revendications précédentes, **caractérisé en ce qu'**au moins un galet de roulement (8) est disposé sur chaque élément partiel (21, 22).

9. Dispositif de transport selon l'une quelconque des revendications précédentes, **caractérisé en ce qu'**un axe de galet de roulement des galets de roulement (8) et l'axe d'articulation (70) de l'articulation (7) coïncident.

10. Dispositif de transport selon l'une quelconque des revendications précédentes, **caractérisé par** une deuxième articulation (10), qui est prévue entre le premier et le deuxième éléments partiels (21, 22).
